# EUROPEAN PATENT SPECIFICATION

(11) **EP 0 553 783 B1**
(45) Date of publication and mention of the grant of the patent: **18.09.1996**
(21) Application number: 93101195.1
(22) Date of filing: 27.01.1993
(51) Int. Cl.: C02F 11/12, B30B 9/14

(54) **Screw type hydrextractor**
Entwässerungsvorrichtung auf Basis einer Schraubenpresse
Appareil de déshydratation du type à vis

(30) Priority: 31.01.1992 JP 15603/92; 18.06.1992 JP 159062/92; 26.08.1992 JP 226301/92
(43) Date of publication of application: 04.08.1993
(73) Proprietor: HITACHI ZOSEN CORPORATION, Konohana-ku, Osaka 554 (JP)
(72) Inventor: Yoshikawa, Tadao, c/o HITACHI ZOSEN CORPORATION, Konohana-ku, Osaka (JP)
(74) Representative: Le Vrang, Klaus

(56) References cited:
- DE-A- 3 907 817
- US-A- 3 939 763
- PATENT ABSTRACTS OF JAPAN, unexamined applications, C field, vol. 7, no. 19, January 25, 1983 THE PATENT OFFICE JAPANESE GOVERNMENT page 16 C 147

## Description

### FIELD OF THE INVENTION

The present invention relates to a screw type hydroextractor for dewatering various kinds of sludge, such as construction related sludge, sewage sludge, night soil sludge, and pulp sludge, to render them reduced in volume.

### BACKGROUND OF THE INVENTION

A typical example of screw type hydroextractor is a screw press. Generally, known screw presses have a spiral screw vane fixed to the outer periphery of a rotary shaft and are so designed that water is collected through a screen arranged along the outer periphery of the screw vane as the rotary shaft rotates. Examples for such hydroextractors are shown in DE-A 39 07 817 or JP-A 57-174 198.

With such arrangement of known screw presses, one problem is that the screw vane is fixed to the outer periphery of the rotary shaft, which results in that sludge or material to be dewatered turns with both the screw vane and the rotary shaft. Another problem is that a screen is provided only on the external side of the screw vane and this affords no favourable dewatering efficiency. In order to achieve improved dewatering efficiency, it may be conceivable to provide the rotary shaft with holes for dewatering. However, since the material to be dewatered will turn with the rotary shaft as stated above, provision of such holes contributes little to improving the dewatering efficiency.

### DISCLOSURE OF THE INVENTION

It is an object of the present invention to provide a screw type hydroextractor which can eliminate the foregoing problems.

In order to accomplish this object, the screw type hydroextractor according to the invention comprises:
a first cylindrical casing,
a second cylindrical casing concentrically disposed within the first cylindrical casing to define an annular space relative to the first cylindrical casing,
an inlet port for material to be dewatered and an outlet port for dewatered material which are formed respectively at one and other ends of said first cylindrical casing,
a ribbon-shaped screw vane rotatably arranged within said annular space,
means for rotating said ribbon-shaped screw vane,
dewatering screens arranged in said first and second cylindrical casings at predetermined locations,
means for gradually compressing the material to be dewatered during its path from said inlet port to said outlet port,
valve means for urging said dewatered-material outlet port in a closing direction under a predetermined biasing force,
a water outlet provided in said second cylindrical casing for discharging water that has entered the second cylindrical casing after passing through the dewatering screen of the second cylindrical casing.

According to such arrangement, the material to be dewatered, such as sludge, that is introduced into the first cylindrical casing through the inlet port is transported in the annular space toward said other end of the first cylindrical casing by the ribbon-shaped screw vane as the vane is rotated by the rotating means. The material to be dewatered is gradually compressed in the course of it being so transported, so that water contained in the material being dewatered is forced out from the material. The water that is thus forced out is discharged outward from the screen portions of the first and second cylindrical casings.

It is noted in this connection that the first and second cylindrical casings which are respectively provided with screen portions are adapted to be rotated separately from the ribbon-shaped screw vanes. Therefore, by arranging that the cylindrical casings are held stationary, it is possible to avoid the trouble of the material-to-be-dewatered turning with the cylindrical casings. Further, the screen portions for removing water from the material being dewatered which are formed in the inner and outer cylindrical casings can provide for good improvement in dewatering efficiency.

### BRIEF DESCRIPTION OF THE DRAWINGS

FIG. 1 is a sectional view of a screw type hydroextractor representing a first embodiment of the present invention;
FIG. 2 is a section taken on the line II - II in FIG. 1;
FIG. 3 is a section taken on the line III - III in FIG. 1;
FIG. 4 is a partially cutaway side view of a screw type hydroextractor representing a second embodiment of the invention;
FIG. 5 is a sectional view of a screw type hydroextractor representing a third embodiment of the invention;
FIG. 6 is a fragmentary sectional view of a screw type hydroextractor representing a fourth embodiment of the invention;
FIG. 7 is a fragmentary sectional view of a screw type hydroextractor representing a fifth embodiment of the invention;
FIG. 8 is a perspective view of a ribbon-shaped screw vane as seen in FIG. 7;
FIG. 9 is a fragmentary sectional view of a screw type hydroextractor representing a sixth embodiment of the invention;
FIG. 10 is a fragmentary sectional view of a screw type hydroextractor representing a seventh embodiment of the invention;
FIG. 11 is a section taken along the line XI-XI in FIG. 10;
FIG. 12 is a cross sectional view of a ribbon-shaped screw vane as seen in FIG. 10;
FIG. 13 is a view showing general configuration of a heating-fluid channel formed in the ribbon-shaped screw vane seen in FIGS. 10 to 12;
FIG. 14 is a cross sectional view showing a modified form of the ribbon-shaped screw vane shown in FIGS. 10 to 13;
FIG. 15 is a cross sectional view showing a further modified form of the ribbon-shaped screw vane; and
FIG. 16 is a cross sectional view showing another modified form of the ribbon-shaped screw vane.

### DESCRIPTION OF THE EMBODIMENTS

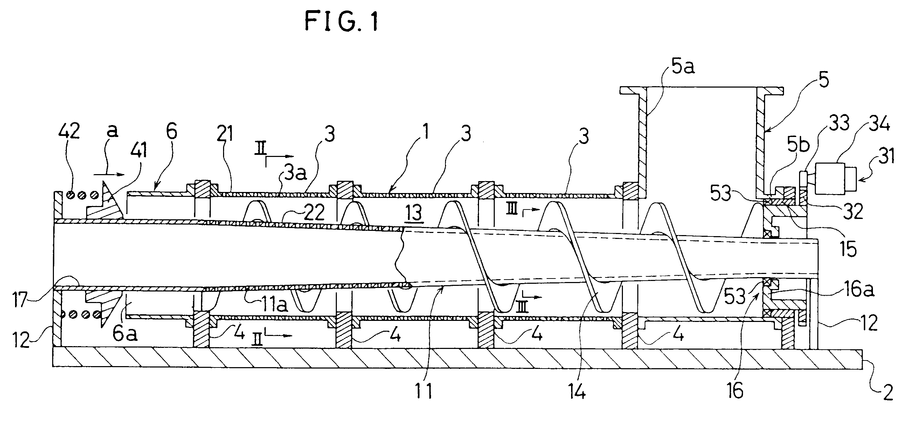

The first embodiment of the present invention will now be described with reference to FIGS. 1 to 3.

In FIG. 1, the reference numeral 1 designates a diametrically larger first cylindrical casing disposed horizontally on a support bed 2 which comprises a plurality of cylindrical casing portions 3 splittable from one another and arranged in succession along the length of the first cylindrical casing 1, and support ring portions 4 adapted to interconnect the cylindrical casing portions 3 and support them on the bed 2.

Connected to the cylindrical casing portion 3 of the first cylindrical casing 1 at one end side thereof is a charging portion 5 formed with an open-topped inlet port 5a for material to be dewatered. A cylindrical discharge portion 6 formed with an outlet port 6a for dewatered material is connected to the cylindrical casing portion 3 at the other end of the first cylindrical casing 1.

A diametrically smaller second cylindrical casing 11 is disposed horizontally within and extends through the first cylindrical casing 1 coaxially therewith, the casing 11 being fixedly supported at both ends by support members 12. The outer diameter of the second cylindrical casing 11 is tapered in such a way that it becomes progressively larger as it extends from one end toward the other end.

A spiral ribbon-shaped screw vane 14 is rotatably disposed in a tapered annular space 13 defined between the two cylindrical casings 1 and 11. More particularly, a cylindrical rotary member 16 is supported at a cylindrical end portion 5b of the charging portion 5 through a bearing 15, and the ribbon-shaped screw vane 14 is connected at one end to a side wall 16a of the cylindrical rotary member 16. The ribbon-shaped screw vane 14 in its entirety is supported on the inner periphery of the support ring portions 4 of the first cylindrical casing 1, and one end of the second cylindrical casing 11 extends through the side wall 16a of the cylindrical rotary member 16.

The support ring portions 4 are slightly smaller in inner diameter than the cylindrical casings 1 so that the inner periphery of the former protrudes more inward than that of the latter so as to prevent the outer periphery of the ribbon-shaped screw vane 14 from contacting the inner surface of the cylindrical casing portions 3. The height of the ribbon-shaped screw vane 14 decreases gradually toward the other end of the vane 14 in corresponding relation to the tapered annular space 13.

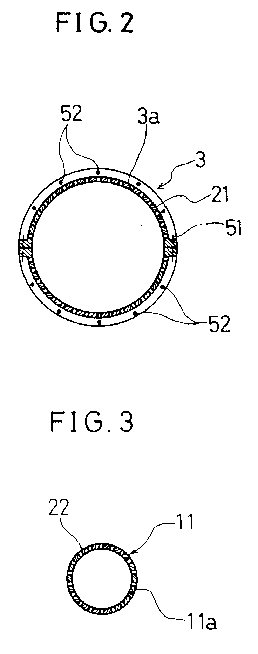

As shown in FIG. 2 in particular, each cylindrical casing portion 3 of the first cylindrical casing 1 is formed with a multiplicity of dewatering holes 3a which form an outer screen 21. Similarly, as shown in FIG. 3 in particular, that portion of the second cylindrical casing 11 which corresponds to the outer screen 21 is formed with a multiplicity of dewatering holes 11a which form an inner screen 22.

At one end of the first cylindrical casing 1 there is provided a rotary drive unit 31 for rotating the ribbon-shaped screw vane 14 through a cylindrical rotary member 16. More particularly, a ring gear 32 is fitted on the periphery of the cylindrical rotary member 16 at the end thereof, and a motor 34 is provided for driving a pinion 33 which engages the ring gear 32.

A cone valve 41 is axially slidably supported on the outer periphery of the second cylindrical casing 11 at a position corresponding to the outlet port 6a. A compression spring 42 is provided for constantly biasing the cone valve 41 in a closing direction of the outlet port 6a (as indicated by the arrow a).

Each cylindrical casing portion 3 is of a two-part construction as shown, for example, in FIG. 2, the two parts being integrally connected by bolts 51 and fixed to adjacent support ring portions 4 by bolts 52. In FIG. 1, sealants 53 are interposed between the cylindrical rotary member 16 and the respective cylindrical casings 1, 11.

A water collecting cover member or water receiving tray, though not shown, is provided at a location corresponding to the outer screen 21 of the first cylindrical casing 1 for collection of water from the material being dewatered.

According to the above described arrangement, material to be dewatered, such as sludge, which is charged into the first cylindrical casing 1 through the charging portion 5, is transported within the annular space toward the other end thereof by the ribbon-shaped screw vane 14 as driven by the motor 34 into rotation. During this process, the material to be dewatered is gradually compressed so that water contained therein is squeezed out, because the annular space 13 becomes progressively narrower toward the other end. Water thus squeezed out is discharged outward partly through the outer screen 21 of the first cylindrical casing 1, and some other part of the water enters into the second cylindrical casing 11 through the inner screen 22 provided on the casing 11 before same is dischared outward through a discharge port 17 at an end of the casing 11.

Dewatered material is moved to the other end of the first cylindrical casing 1. Since the outlet port 6a is held in a closed condition by the cone valve 41 which is biased by the compression spring 42, dewatered material is thrust out against the biasing force of the compression spring 42. This provides improved dewatering efficiency.

As described above, the ribbon-shaped screw vane 14 is rotatably disposed within the annular space 13 which is defined between the cylindrical casings 1 and 11 so that material being dewatered is thrust out gradually toward the outlet port 6a. Therefore, the trouble of the to-be-dewatered material turning in conjunction with the cylindrical casings 1, 11 can be effectively prevented. Further, the dewatering screens 21 and 22 provided respectively on the cylindrical casings 1 and 11 enable two-sided hydroextraction, with the result that bulk of the mass under hydroextraction is reduced; and thus improved dewatering efficiency can be achieved.

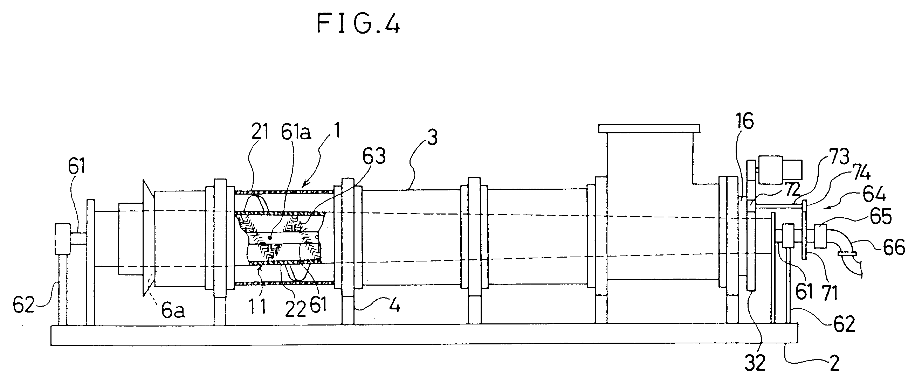

Nextly, the second embodiment of the invention will be described with reference to FIG. 4.

In this embodiment, a cleaning device is provided in a second cylindrical casing similar to that in the screw type hydroextractor of the above described first embodiment for purposes of cleaning the interior of the second cylindrical casing.

As FIG. 4 shows, a water jetting hollow shaft member or pipe 61 is disposed within the second cylindrical casing 11 and extends therethrough. This pipe 61 is formed with a multiplicity of water jet holes 61a spaced at predetermined intervals. The pipe 61 is rotatably supported at both ends on a bed plate 2. At portions of the pipe 61 which correspond to the outer and inner screens 21, 22 and also at a position adjacent an outlet port 6a are provided cleaning brushes 63 for cleaning the inner periphery of the second cylindrical casing 11 which are spirally wound about the pipe 61. The pipe 61 is designed to be rotated by a rotary drive mechanism 64. A water supply pipe 66 is connected to one end of the pipe 61 through a rotary joint 65.

The rotary drive mechanism 64 comprises a driven gear 71 mounted to one end of the pipe 61, a driving gear 72 geared to the driven gear 71 and held in mesh with a ring gear 32 of the rotary cylindrical member 16, and a coupling shaft 73 and a coupling gear 74 which interlockingly connect the driving gear 72 and driven gear 71. The coupling shaft 73 is supported, for example, at the stationary side or by the second cylindrical casing 11. Therefore, as the rotary cylindrical member 16 is rotated by the motor 34, the pipe 61 goes into rotation via the rotary drive mechanism 64.

According to the above described arrangement, while the ribbon shaped screw vane 14 is driven by the motor 34 into rotation for hydroextraction of the mass to be dewatered, water is supplied into the pipe 61 through the water supply pipe 66. Then, water is jetted out from the water jet holes 61a toward the inner screen 22 which is provided on the second cylindrical casing 11. Thus, sludge mass that has deposited on the inner periphery of the inner screen 22 is washed away. Further, in this process of cleaning, rotation of the pipe 61 causes the cleaning brush 63 to slide over the inner periphery of the inner screen 22, so that sludge is forcibly scraped down which is accordingly moved toward the discharge port 17.

In this second embodiment, driving force applied in rotating the ribbon shaped screw vane 14 is utilized for turning the pipe 61. Needless to say, however, a rotary drive unit for separately driving the pipe 61 or a separate device having a motor may be provided for this purpose.

In the foregoing embodiments, the screens 21, 22 are provided over substantially entire length of the cylindrical casings. However, the dimensional range for provision of such screens may be varied according to the physical characteristics of sludgy masses to be dewatered. For example, such screen may be provided with respect to a latter half portion of each cylindrical casing or as otherwise desired. In that case, the dimensional range for provision of cleaning brushes in the second cylindrical casing should be generally coextensive with the screens.

In the above described embodiments, the cylindrical casings 1, 11 which are provided with dewatering screens 21, 22 are held stationary and not rotated. Alternatively, for example, one or both of the cylindrical casings 1, 11 may be rotated. In that case, the rotational velocity of the cylindrical casing or casings should be so set as to be different from the rotational speed of the screw vane in order to avoid the trouble of sludgy mass rotating in association with the cylindrical casing(s).

When the first cylindrical casing is to be rotated, the first cylindrical casing is supported on rotary support rollers and a ring gear is mounted on the outer periphery of the first cylindrical casing. Further, a motor is provided for driving the ring gear into rotation through a pinion.

When the second cylindrical casing is to be rotated, the second cylindrical casing is supported at both ends by means of bearings or support rollers, and a ring gear is provided at one end of the casing. Further, a motor is provided for driving the ring gear into rotation through a pinion.

In the foregoing embodiments, the inner surface of the first cylindrical casing 1 is formed longitudinally straight while the outer surface of the second cylindrical casing 11 is tapered. However, this arrangement may be reversed. In this case, the height of the ribbon shaped screw vane 14 should be varied so as to match the configuration of the annular space 13 which is defined between the two cylindrical casings.

The two cylindrical casings 1, 11 may be configured to be longitudinally straight, and likewise the ribbon shaped screw vane 14 may be configured to have longitudinally straight inner and outer surfaces. In such a case, the axial pitch of the ribbon shaped screw vane may be varied, for example, in such a way that the pitch of the vane becomes gradually narrower toward the outlet port 6a side as measured from the inlet port 5a side.

The number of dewatering holes 3a, 11a formed in the screen portions 21, 22, and the diameter of each such hole, may be suitably changed according to the physical characteristics of the material to be dewatered.

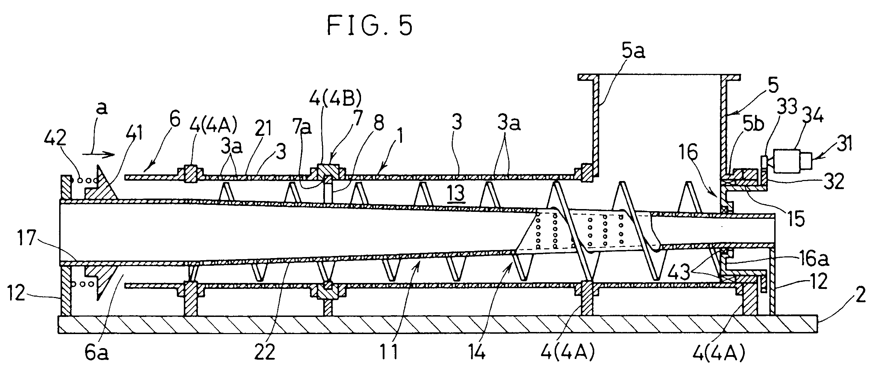

The third embodiment of the invention will now be described with reference to FIG. 5.

In FIG. 5, support ring portions 4 include a rotary support ring portion 4A adapted to merely rotatably support a ribbon shaped screw vane 14, and a restrictive support ring portion 4B for restricting the movement of the ribbon shaped screw vane 14 in the axial direction of rotation thereof. The support ring portion 4A is of a similar construction to each support ring portion 4 shown in FIG. 1. The restrictive support ring portion 4B comprises a stationary ring 7 fixedly disposed between adjacent cylindrical casing portions 3 and formed with an annular groove 7a, and a rotary ring 8 having an inner periphery to which is fixed an outer periphery portion of the ribbon shaped screw vane 14, with the outer periphery of the ring 8 being rotatably fitted in the annular groove 7a of the stationary ring 7.

Accordingly, the movement of the ribbon shaped screw vane 14 in the axial direction thereof is restricted by the rotary ring 8 and stationary ring 7.

According to such arrangement, during the process of hydroextraction of sludgy mass through the rotation of the ribbon shaped screw vane 14, the screw vane 14 is supported in position by the first cylindrical casing 1 through the rotary ring 8 and stationary ring 7 which are disposed adjacent mid-portion of the vane 14, and can therefore effectively cope with an axial force acting thereon in the axial direction of its rotation. Therefore, the ribbon shaped screw vane 14 can be prevented from being subjected to such trouble as deformation.

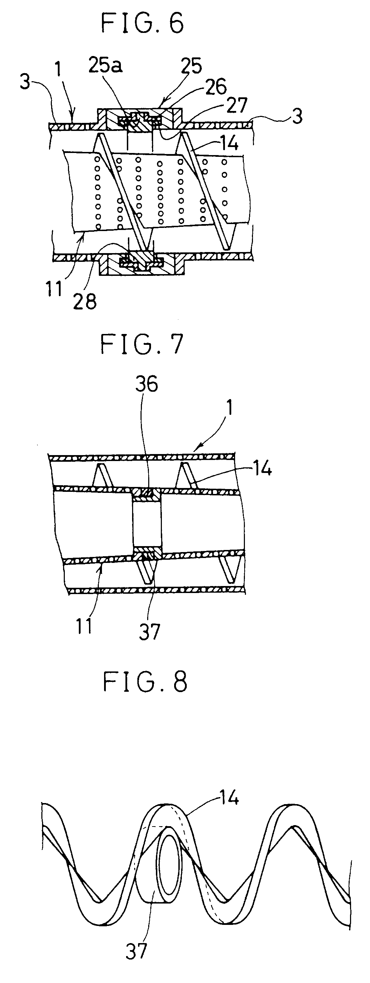

Nextly, the fourth embodiment of the invention will be described with reference to FIG. 6.

In this fourth embodiment, a restrictive support ring portion for supporting the ribbon shaped screw vane 14 which is different in construction from that of the third embodiment is employed. As shown, a stationary ring 25 disposed between adjacent cylindrical casing portions 3 is fomed with an annular groove 25a in which are disposed a sliding bush 26 and a sealant 27.

By virtue of this arrangement, it is possible to restrict the axial movement of the ribbon shaped screw vane 14 and thus more firmly support a rotary ring 28 which may be subject to an axial force.

Nextly, the fifth embodiment of the invention will be described with reference to FIGS. 7 and 8.

Whereas, in the earlier described third embodiment, a restrictive support ring portion 4B for preventing axial deformation of the ribbon shaped screw vane 14 is provided on the first cylindrical casing 1 side, such a support ring portion is provided on the second cylindrical casing 11 side in this fifth embodiment.

As FIGS. 7 and 8 show, an annular groove 36 is formed on the outer periphery of the second cylindrical casing 11 at a mid-portion thereof, with a rotary ring 37 rotatably fitted in the annular groove 36. An inner periphery portion of the ribbon shaped screw vane 14 is fixedly secured to the outer periphery of the rotary ring 37.

This arrangement provides satisfactory function as does the third embodiment.

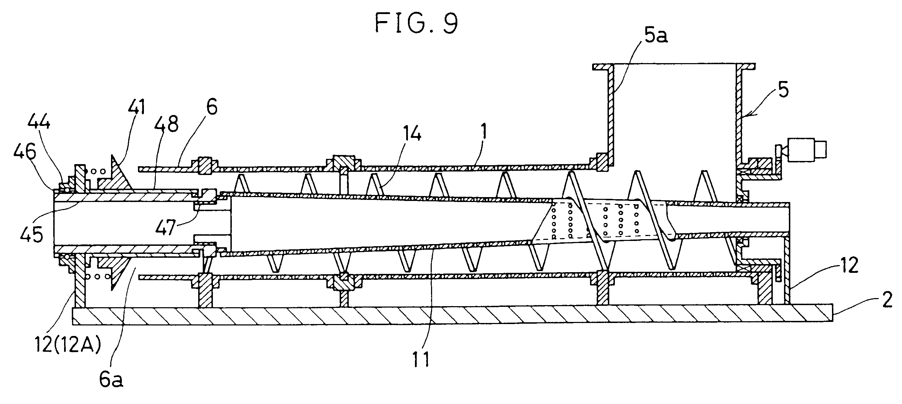

Nextly, the sixth embodiment of the invention will be described with reference to FIG. 9.

Whereas, in the above described third to fifth embodiments, means for preventing axial deformation of the ribbon shaped screw vane is provided in a mid-portion of the screw vane, such means is disposed at the other end side of the second cylindrical casing in this sixth embodiment. As shown, a cylindrical member 45 is rotatably supported via a bearing 44 by a support member 12A provided at the other end side of the second cylindrical casing 11 and is restricted by an annular locking portion 46 provided at one end thereof in its movement toward the other end. On the inner peripherey of the cylindrical member 45 at the other end thereof is rotatably supported the other end of the second cylindrical casing 11 through a bushing 47, and to said other end of the cylindrical member 45 is connected the other end of the ribbon shaped screw vane 14.

Therefore, and since the annular locking portion 46 is locked to the support member 12, the ribbon shaped screw vane 14 is not liable to any axial deformation even when a pressure oriented toward the inlet port or an axial force is exerted on the ribbon shaped screw vane 14.

In FIG. 9, the reference numeral 48 designates a guide sleeve which is supported by a support member 12A and which rotatably supports the cylindrical member 45. A cone valve 41 for biasing the outlet port 6a in a closing direction is slidably fitted on the outer periphery of the guide sleeve 48.

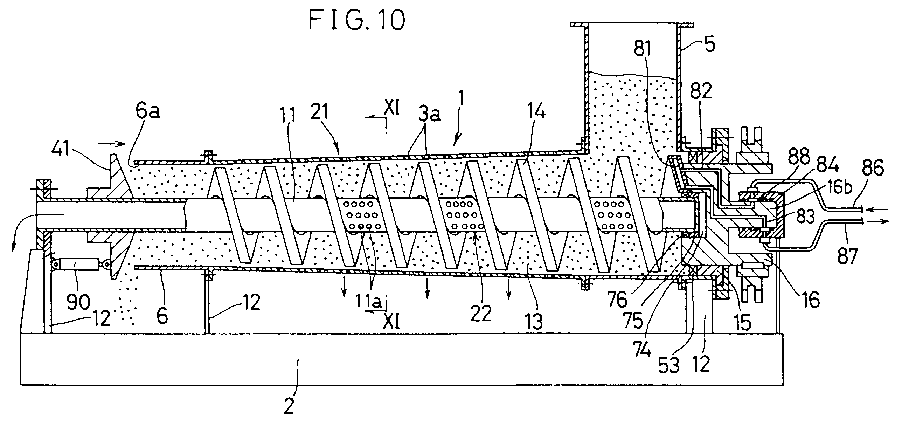

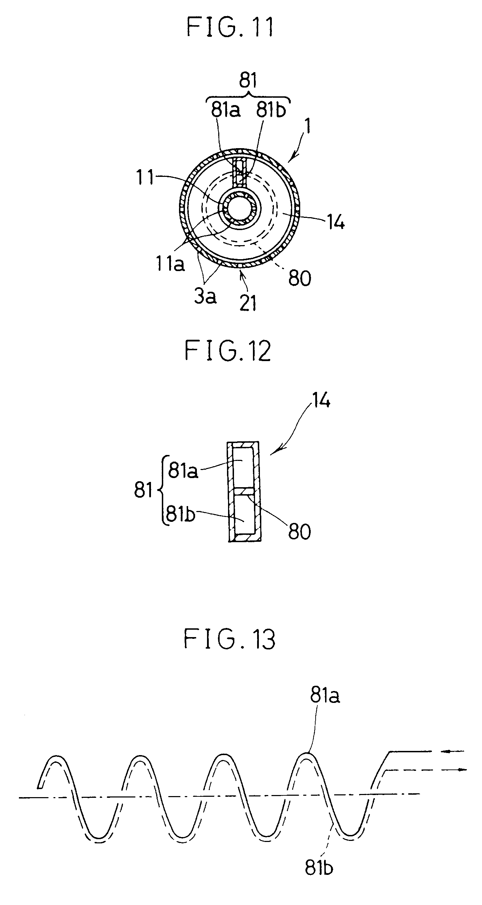

FIGS. 10 and 11 illustrate a screw type hydroextractor representing the seventh embodiment of the invention. As shown, a second cylindrical casing 11 is supported at one end thereof in a recess 74 formed centrally in a rotary cylindrical member 16, via a bearing 75 and a sealant 76, for relative rotation. A ribbon shaped screw vane 14 is securely fixed at one end to the rotary cylindrical member 16 for integral rotation therewith.

As FIG. 12 shows, the ribbon shaped screw vane 14 is rectabgular box-shaped in cross section and has an enclosed internal space in which is formed a channel 81 consisting of an outer peripherl side forward path 81a and an inner peripheral side return path 81b which are defined by a partition plate 80 centrally provided in the space and extending along nearly the whole length of the screw vane 14. The forward path 81a and the return path 81b communicate with each other at one end of the ribbon shaped screw vane 14 and are connected at the other end of the vane 14 to a heating fluid supply pipe 86 and a heating fluid discharge pipe 87 through communicating holes 82, 83 bored in the rotary cylindrical member 16 and through a rotary joint 84 which is fitted via a sealant 88 on a projecting portion 16b of the rotary cylindrical member 16.

As FIG. 13 shows, heating fluid, such as steam, supplied into the forward path 81a through the heating fluid supply pipe 86 and communicating hole 82 flows to one end of the ribbon shaped screw vane 14 and, in turn, enters and flows along the return path 81b until it returns to the other end of the ribbon shaped screw vane 14, whereupon the fluid is discharged outward through the communicating hole 83 and heating fluid discharge pipe 87. Through this process the entirety of the ribbon shaped screw vane 14 is generally uniformly heated to a predetermined temperature.

As is apparent from FIG. 10, the cone valve 41 which is slidably fitted on the front end portion of the second cylindrical casing 11 is moved toward and away from the outlet port 6a by a cylinder device 90 disposed between the cone valve 41 and the support member 12, whereby the open area of the outlet port 6a is suitably adjusted so that the material to be dewatered may be pressed with a desired force.

During dewatering operation, heating fluid is introduced into the channel 81 in the ribbon shaped screw vane 14 so that the screw vane 14 is heated to the predetermined temperature. In this case, a larger contact area is available for contact of the sludgy mass with the ribbon shaped screw vane 14 and thus the sludgy mass is generally uniformly heated to the predetermined temperature during the dewatering operation. This provides for considerable improvement in dewatering efficiency. The water content of that part of the sludgy mass which contacts the ribbon shaped screw vane 14 is evaporated by heating to generate water vapor. The presence of such water vapor will help reduce the friction between the sludgy mass and the screw vane 14, and this can serve to prevent the sludgy mass from turning in association with the screw vane 14, resulting in greater improvement in compressibility. Furthermore, heating of the material to be dewatered serves to improve the dewatering action of any dehydrating promotor added to the sludgy mass.

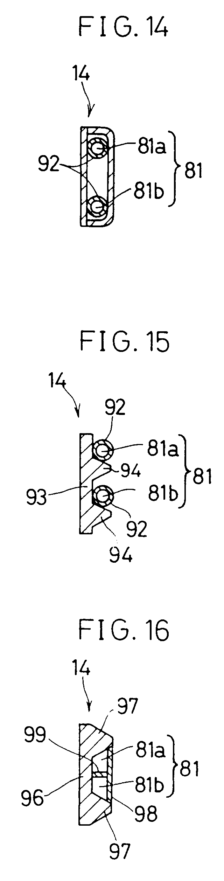

In the above described arrangement, the ribbon shaped screw vane 14 is configured to have a cross section of a rectangular box shape and a partition plate 80 is disposed within the enclosed internal space of the screw vane to define a flow channel 81. However, it is understood that such arrangement is not intended to limit the invention. For example, as FIG. 14 illustrates, it is possible to arrange that a heating fluid pipe 92 is installed in the enclosed internal space.

Further, as FIG. 15 illustrates, the ribbon shaped screw vane 14 may be constructed of a plate material 93, with a pair of ledges 94, 94 integrally formed on a side of and extending longitudinall of the plate material 93, and with a heating fluid pipe 92 arranged along a side of each ledge 94, 94.

Also, as FIG. 16 illustrates, it may be possible to arrange that the ribbon shaped screw vane 14 is constructed of a plate material 96, and that a side plate 98 is so disposed as to bridge a pair of ledges 97, 97 formed on side edges of the plate material 96 integrally therewith, an enclosed space being defined between the side plate 98 and the plate material 96. A partition plate 99 is arranged centrally in the enclosed space to thereby form a flow channel 81 for heating fluid.

## Claims

1. A screw type hydroextractor, comprising:
a first cylindrical casing (1),
a second cylindrical casing (11) concentrically disposed within the first cylindrical casing to define an annular space (13) relative to the first cylindrical casing,
an inlet port (5a) for material to be dewatered and an outlet port (6a) for dewatered material which are formed respectively at one and other ends of said first cylindrical casing,
a ribbon-shaped screw vane (14) rotatably arranged within said annular space,
means (16) for rotating said ribbon-shaped screw vane,
dewatering screens (21, 22) arranged in said first and second cylindrical casings at predetermined locations,
means for gradually compressing the material to be dewatered during its path from said inlet port to said outlet port,
valve means (41) for urging said dewatered-material outlet port in a closing direction under a predetermined biasing force,
a water outlet provided in said second cylindrical casing for discharging water that has entered the second cylindrical casing after passing through the dewatering screen of the second cylindrical casing.

2. A screw type hydroextractor according to claim 1,
characterized by means (61, 63) for cleaning the inner periphery of the screen of the second cylindrical casing.

3. A screw type hydroextractor according to claim 2,
characterized in that the cleaning means comprises a rotary water spray pipe (61) disposed concentrically within the second cylindrical casing, and a rotary brush (63) rotatable integrally with the water spray pipe.

4. A screw type hydroextractor according to one of the forgoing claims,
characterized by a ring member (8) mounted on an outer peripheral portion or inner peripheral portion of the ribbon shaped screw vane, and means for rotatably holding the ring member (8) through an annular groove (7), said holding means being disposed on the first or second cylindrical casing side.

5. A screw type hydroextractor as set forth in one of the forgoing claims,
characterised by a rotary member disposed adjacent the outlet port of the second cylindrical casing, said rotary member being rotatable and restricted by a locking portion in its movement toward the inlet port, said ribbon shaped screw vane being connected to said rotary member.

6. A screw type hydroextractor according to one of the claims 1 to 5,
characterised in that the ribbon shaped screw vane is formed with a flow channel (81) for heating fluid.

7. A screw type hydroextractor according to claim 6,
characterised in that the ribbon shaped screw vane has an enclosed space formed therein, and wherein forward and return paths (81a, 81b) for heating fluid are formed in the enclosed space, the forward and return paths extending over the entire length of the ribbon shaped screw vane and communicating with each other at one end of the ribbon shaped screw vane.

8. A screw type hydroextractor according to claim 7,
characterised in that the enclosed space is separated into a heating fluid forward path and a heating fluid return path by a partition plate (80) disposed in the enclosed space and extending over the entire length of ribbon shaped screw vane.

9. A screw type hydroextractor according to one of the forgoing claims,
wherein the flow channel (81) is comprised of a pipe (92).

10. A screw type hydroextractor according to claim 9,
characterized in that the ribbon shaped screw vane (14) has a cross section of a box shape, with the pipe disposed in the box.

11. A screw type hydroextractor according to claims 9 or 10,
characterized in that the pipe is disposed along the surface of the ribbon shaped screw vane.

## Patentansprüche

1. Schraubentyp-Hydroextraktor mit
einem ersten zylindrischen Gehäuse (1),
einem zweiten zylindrischen Gehäuse (11), das konzentrisch innerhalb des ersten zylindrischen Gehäuses angeordnet ist, um einen ringförmigen Raum (13) bezüglich des ersten zylindrischen Gehäuses zu begrenzen,
eine Einlaßöffnung (5a) für das zu entwässernde Material und eine Auslaßöffnung (6a) für das entwässerte Material, die an jeweils einem und dem anderen Ende des ersten zylindrischen Gehäuses angeordnet sind,
eine bandförmige Schraubenschaufel (14), die drehbar innerhalb des ringförmigen Raumes angeordnet ist,
Mittel (16) zum Drehen der bandartigen Schraubschaufel,
Entwässerungssiebe (21, 22), die in den ersten und zweiten zylindrischen Gehäusen an vorgegebenen Stellen angeordnet sind,
Mittel zum graduellen Zusammendrücken des zu entwässernden Materials während seines Weges von der Einlaßöffnung zur Auslaßöffnung,
Ventile (41) zur Beaufschlagung der Auslaßöffnung für das entwässerte Material in Schließrichtung unter einer vorgegebenen Beaufschlagungskraft,
eine Wasserauslaßoffnung in dem zweiten zylindrischen Gehäuse zur Abgabe von Wasser, das in das zweite zylindrische Gehäuse nach dem Durchlaufen durch das Entwässerungssieb des zweiten zylindrischen Gehäuses eingetreten ist.

2. Schraubentyp-Hydroextraktor nach Anspruch 1, gekennzeichnet durch Mittel (61, 63) zum Säubern des Innenumfanges des Siebes des zweiten zylindrischen Gehäuses.

3. Schraubentyp-Hydroextraktor nach Anspruch 2, dadurch gekennzeichnet, daß die Säuberungsmittel ein drehbares Wassersprührohr (61) umfassen, das konzentrischen innerhalb des zweiten zylindrischen Gehäuses angeordnet ist, und eine Rotationsbürste (63), die zusammen mit dem Wassersprührohr drehbar ist.

4. Schraubentyp-Hydroextraktor gemäß einem der vorhergehenden Ansprüche, gekennzeichnet durch ein Ringteil (8), das am Außenumfang oder am inneren Umfang der bandförmigen Schraubenschaufel befestigt ist, und Mittel zum drehbaren Halten des Ringteiles (8) über eine ringförmige Ausnehmung (7), wobei die Haltemittel auf der ersten oder zweiten Zylindergehäuseseite angeordnet sind.

5. Schraubentyp-Hydroextraktor nach einem der vorhergehenden Ansprüche, dadurch gekennzeichnet, daß ein Rotationsteil neben der Auslaßöffnung des zweiten zylindrischen Gehäuses angeordnet ist, wobei das Rotationsteil drehbar ist und durch einen Sperrabschnitt in seiner Bewegung in Richtung zur Einlaßöffnung begrenzt ist, wobei die bandartige Schraubschaufel mit dem Drehteil verbunden ist.

6. Schraubentyp-Hydroextraktor nach einem der Ansprüche 1 bis 5, dadurch gekennzeichnet, daß die bandartige Schraubschaufel mit einem Flußkanal (81) für ein Wärmefluid ausgebildet ist.

7. Schraubentyp-Hydroextraktor nach Anspruch 6, dadurch gekennzeichnet, daß die bandförmige Schraubschaufel einen darin ausgebildeten umschlossenen Raum besitzt, und daß Vor- und Rückwege (81a, 81b) für das Wärmefluid in dem umschlossenen Raum ausgebildet sind, wobei sich die Vor- und Rückwege über die Gesamtlänge der bandartigen Schraubschaufel erstrecken und miteinander an dem einen Ende der bandförmigen Schraubschaufel in Verbindung stehen.

8. Schraubentyp-Hydroextraktor nach Anspruch 7, dadurch gekennzeichnet, daß der eingeschlossene Raum in einen vorwärtigen und in einen rückwärtigen Wärmefluidweg durch eine Trennplatte (80) getrennt ist, die in dem umschlossenen Raum angeordnet ist und sich über die gesamte Länge der bandartigen Schraubschaufel erstreckt.

9. Schraubentyp-Hydroextraktor gemäß einem der vorhergehenden Ansprüche, dadurch gekennzeichnet, daß der Flußkanal (81) ein Rohr (92) umfaßt.

10. Schraubentyp-Hydroextraktor nach Anspruch 9, dadurch gekennzeichnet, daß die bandartige Schraubschaufel (14) einen kastenartigen Querschnitt aufweist, wobei das Rohr innerhalb des Kastens angeordnet ist.

11. Schraubentyp-Hydroextraktor nach Anspruch 9 oder 10, dadurch gekennzeichnet, daß das Rohr entlang der Oberfläche der bandartigen Schraubschaufel angeordnet ist.

## Revendications

1. Hydro-extracteur du type a vis, comprenant
un premier carter cylindrique (1),
un second carter cylindrique (11) disposé concentriquement à l'intérieur du premier carter cylindrique de manière a définir un espace annulaire (13) par rapport au premier carter cylindrique,
un orifice d'entrée (5a) pour la matière a déshydrater et un orifice de sortie (6a) pour la matière déshydratée, formés respectivement à l'une et à l'autre extrémités dudit premier carter cylindrique,
une pale en hélice en forme de ruban (14) montée à rotation dans ledit espace annulaire,
des moyens (16) pour faire tourner ladite pale en hélice en forme de ruban,
des tamis de déshydratation (21,22) disposés dans lesdits premier et second carters cylindriques à des endroits prédéterminés,
des moyens pour comprimer progressivement la matière à déshydrater dans son trajet entre ledit orifice d'entrée et ledit orifice de sortie,
une vanne (41) qui a tendance à agir sur l'orifice de sortie de la matière déshydratée dans le sens de la fermeture sous l'action d'une force élastique prédéterminée,
une évacuation d'eau disposée dans ledit second carter cylindrique pour décharger l'eau lui a pénétré dans le second carter cylindrique après avoir traversé le tamis de déshydratation du second carter cylindrique.

2. Hydro-extracteur du type à vis selon la revendication 1, caractérisé par des moyens (61,63) pour nettoyer la périphérie interne du tamis du second carter cylindrique.

3. Hydro-extracteur du type à vis selon la revendication 2, caractérisé en ce que les moyens de nettoyage comprennent un tube rotatif (61) de pulvérisation d'eau, disposé concentriquement dans le second carter cylindrique, et une brosse rotative (63) qui peut tourner en étant solidaire du tube de pulvérisation d'eau.

4. Hydro-extracteur du type à vis selon l'une quelconque des revendications 1 à 3, caractérisé par un élément annulaire (8) monté sur une partie périphérique externe ou une partie périphérique interne de la pale en hélice en forme de ruban, et des moyens pour maintenir à rotation l'élément annulaire (8) dans une gorge annulaire (7), lesdits moyens de maintien étant disposés du côté du premier ou du second carter cylindrique.

5. Hydro-extracteur du type à vis selon l'une quelconque des revendications 1 à 4, caractérisé par un élément rotatif disposé à proximité immédiate de l'orifice de sortie du second carter cylindrique, ledit élément rotatif pouvant tourner et son déplacement vers l'orifice d'entrée étant limité par une partie de blocage, ladite pale en hélice en forme de ruban étant raccordée audit élément rotatif.

6. Hydro-extracteur du type à vis selon l'une quelconque des revendications 1 à 5, caractérisé en ce qu'un conduit d'écoulement (81) est formé dans la pale en hélice en forme de ruban pour un fluide chauffant.

7. Hydro-extracteur du type à vis selon la revendication 6, caractérisé en ce qu'un espace fermé est formé dans la pale en hélice en forme de ruban et des trajets d'aller et de retour (81a,81b) pour le fluide chauffant sont formes dans l'espace fermé, les trajets d'aller et de retour s'étendant sur toute la longueur de la pale en hélice en forme de ruban et communiquant l'un avec l'autre à une extrémité de la pale en hélice en forme de ruban.

8. Hydro-extracteur du type à vis selon la revendication 7, caractérisé en ce que l'espace fermé est divisé en un trajet d'aller du fluide chauffant et en un trajet de retour du fluide chauffant par une plaque de cloisonnement (80) disposée dans l'espace fermé et s'étendant sur toute la longueur de la pale en hélice en forme de ruban.

9. Hydro-extracteur du type à vis selon l'une quelconque des revendications 1 à 8, dans lequel le conduit d'écoulement (81) est constitué par un tuyau (92).

10. Hydro-extracteur du type à vis selon la revendication 9, caractérise en ce que la pale en hélice en forme de ruban (14) a une section transversale en caisson, le tuyau étant disposé dans le caisson.

11. Hydro-extracteur du type à vis selon la revendication 9 ou 10, caractérisé en ce que le tuyau est disposé le long de la surface de la pale en hélice en forme de ruban.
